# FASCICULE DE BREVET EUROPEEN

(11) **EP 1 257 461 B1**
(45) Date de publication et mention de la délivrance du brevet: **30.07.2003**
(21) Numéro de dépôt: 00993703.8
(22) Date de dépôt: 28.12.2000
(51) Int. Cl.: B63B 35/32, E02B 15/04

(54) **APPAREIL RECUPERATEUR DE MATIERES POLLUANTES, EN PARTICULIER DES HYDROCARBURES**
GERÄT ZUM AUS DEM WASSER FÖRDERN VON VERUNREINIGENDEN STOFFEN, INSBESONDERE KOHLENWASSERSTOFFEN
APPARATUS FOR RECUPERATING POLLUTING MATERIALS, IN PARTICULAR HYDROCARBONS

(30) Priorité: 04.01.2000 FR 0000045; 17.03.2000 FR 0003421
(43) Date de publication de la demande: 20.11.2002
(73) Titulaire: Le Droff, Yves, 29260 Kernilis (FR)
(72) Inventeur: Le Droff, Yves, 29260 Kernilis (FR)
(74) Mandataire: Bentz, Jean-Paul
(86) Numéro de dépôt international: FR0003714
(87) Numéro de publication internationale: WO01049560

(56) Documents cités:
- WO-A-92/20572
- DE-A- 2 230 604
- FR-A- 2 483 878
- FR-A- 2 545 856
- FR-A- 2 645 558
- FR-A- 2 698 337
- GB-A- 1 192 230
- GB-A- 1 442 874
- US-A- 3 762 558
- US-A- 4 033 876
- US-A- 4 165 282
- US-A- 4 178 247
- US-A- 4 336 137
- US-A- 5 083 417
- US-A- 5 647 975

## Description

La présente invention concerne un appareil récupérateur de matières polluantes, en particulier des hydrocarbures, ainsi que l'emploi d'un tel appareil pour la récolte des algues.

Elle se rapporte, plus particulièrement, à un appareil destiné à l'enlèvement mécanisé des matières polluantes en bordure de rivage ou sur un plan d'eau agité ou non.

On connaît déjà dans l'état de la technique, notamment par le brevet FR A 2599065, un appareil de ce type qui est pourvu d'un système d'aspiration constitué d'une pompe munie d'une tuyauterie souple de refoulement vers une capacité de stockage.

Ce type d'appareil présente l'inconvénient de ne pouvoir être opérationnel que sur des plans d'eau calme. De plus, selon la consistance de la matière polluante à récupérer, c'est-à-dire une matière pâteuse, adhérante ou un hydrocarbure mêlé de déchets solides, un bourrage de la tuyauterie souple peut se présenter rendant ainsi l'appareil non opérationnel.

Un autre appareil récupérateur, avec les caractéristiques du préambule de la revendication 1, est décrit par le document US3762558.

Le but de l'invention est de proposer un appareil récupérateur qui permet de résoudre tout ou partie des inconvénients précités.

A cet effet, la présente invention a pour objet un appareil récupérateur de matières polluantes, en particulier des hydrocarbures, susceptible d'être fixé à un engin maritime ou terrestre, constitué d'un moyen de convoyage de la matière polluante jusqu'à l'intérieur d'une capacité de stockage, caractérisé en ce que le moyen de convoyage est constitué de deux tapis roulants, désigné tapis supérieur et tapis inférieur, disposés l'un au-dessus de l'autre de manière à former une gaine de conduite forcée pour la matière polluante à récupérer afin de l'acheminer dans la capacité de stockage et en ce que la partie amont des tapis est en contact direct avec le milieu dans lequel se trouve la matière polluante.

Suivant quelques dispositions intéressantes de l'invention:
- la partie amont des tapis supérieur et inférieur est agencée de telle manière à former ensemble une bouche en "V" dont l'angle d'ouverture est réglable en fonction de la consistance de la matière polluante à traiter ;
- il est disposé à l'entrée de ladite bouche un dispositif de découpe de la matière ;
- il est disposé à l'entrée de ladite bouche un dispositif de guidage de la matière polluante ;
- le dispositif de découpe est composé d'une pluralité de bras trancheurs, constitué d'un câble, par exemple en inox, disposés verticalement à l'entrée de la bouche ;
- le moyen de guidage de la matière polluante vers l'entrée de la bouche est constitué d'une vis sans fin motorisée dont la vitesse est adaptée à la matière à récupérer ;
- le moyen de guidage comporte à l'embouchure de la bouche formée par le tapis supérieur et le tapis inférieur des courroies crantées disposées verticalement et formant la forme générale d'un « V » en vue de dessus de l'appareil ;
- la distance séparant les tapis supérieur et inférieur constituant la gaine de conduite forcée est réglable en fonction de la matière par exemple au moyen de vérins hydrauliques ;
- les tapis inférieur et supérieur sont pourvus respectivement dans leurs parties aval d'un moyen de nettoyage ;
- le tapis supérieur est associé à une chaîne dans laquelle les espaces entre chaque maillons de la chaîne forment en coopération avec le tapis inférieur des réservoirs d'acheminement de la matière polluante et en ce que une roue crantée montée libre en rotation est disposée à l'extrémité de ladite chaîne d'une part, le tapis inférieur étant pourvu uniquement d'un fil d'acier positionnée transversalement à l'extrémité de celui-ci d'autre part de manière à former respectivement le moyen de nettoyage ;
- la capacité de stockage est constituée d'un réservoir à capacité de remplissage régulé par des câbles solidaires d'un engin maritime ;
- la partie amont du tapis inférieur est équipée d'une roue de profondeur et l'ensemble formant moyen de convoyage est articulé autour d'un axe transversal sur l'engin auquel il est fixé ;

Un autre objet de l'invention concerne un engin terrestre ou maritime, caractérisé en ce qu'il comporte au moins un appareil conforme à l'une quelconque des caractéristiques mentionnées ci-dessus.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue schématique d'un premier mode de réalisation d'un appareil récupérateur selon la présente invention, fixé sur l'un des côtés d'un navire ou engin maritime,
- la figure 2 est une vue de face partielle à plus grande échelle de la zone A de la figure 1,
- la figure 3 est une vue schématique d'une variante de réalisation de l'appareil selon la présente invention,
- la figure 4 est une vue schématique en perspective à plus grande échelle de la zone B de la figure 3,
- la figure 5 est une vue partielle suivant la flèche D de la figure 1,
- la figure 6 est une vue schématique d'un second mode de réalisation de l'appareil selon l'invention, et
- la figure 7 est une vue schématique latérale d'une variante de réalisation de la partie A de la figure 1.

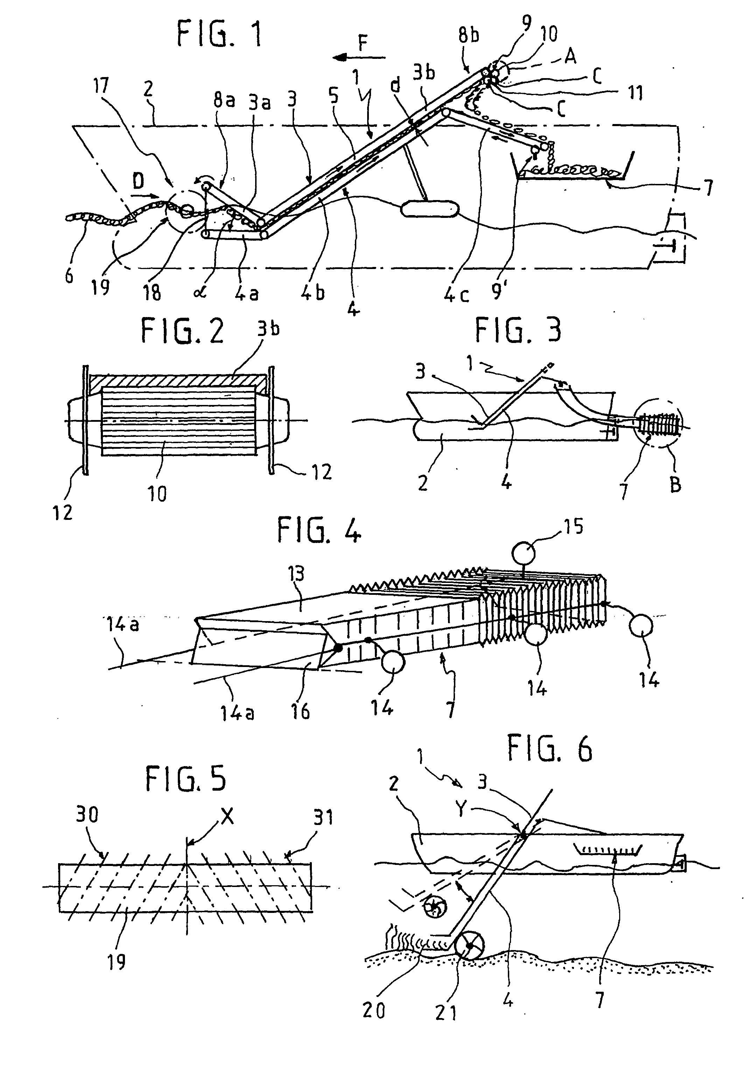

On a représenté à la figure 1, un appareil récupérateur 1 selon la présente invention, disposé sur l'un des côtés latéraux du navire 2.

Cet appareil 1 est constitué, avantageusement, d'un moyen de convoyage de la manière polluante jusqu'à l'intérieur d'une capacité de stockage 7. Ce moyen de convoyage est constitué de deux tapis roulants, désignés respectivement dans la suite de la description, tapis supérieur 3 et tapis inférieur 4, entraînés de manière connue par des moteurs électriques, thermiques ou hydraulique non représentés. Ces tapis sont disposés l'un au-dessus de l'autre de manière à former une gaine 5 de conduite forcée pour la matière polluante 6 à récupérer afin de l'acheminer dans la capacité de stockage 7.

On notera que chacun des tapis est entraîné par des chaînes latérales ou des tapis crantés double supprimant ainsi tous problèmes de patinage. La forme des tapis et la matière de ces tapis sont déterminées selon la nature du polluant à récupérer, ainsi les tapis peuvent être du type brosse, rainurés ou en éponge ou encore en caoutchouc armé résistant aux hydrocarbures. Selon une variante, la forme du tapis supérieur 3 est du type cranté tandis que le tapis inférieur 4 est du type lisse afin de former avantageusement une multitude de réservoir le long du moyen de convoyage.

La partie amont 8a des tapis roulants 3 et 4, en considérant le sens de déplacement représenté par la flèche F du navire 2, est en partie immergée dans l'eau afin de saisir au mieux la matière polluante 6, tandis que la partie aval 8b desdits tapis est située sensiblement au niveau du pont du navire 2.

On notera que le tapis inférieur 4 est composé de trois parties d'acheminement de la matière polluante qui sont délimitées par le changement de pente de ce dernier, désignées respectivement tapis d'entrée 4a, tapis intermédiaire 4b et tapis d'évacuation 4c.

Le tapis supérieur 3 est constitué, comme visible sur la figure 1, de deux parties d'acheminement également délimitées par le changement de pente de ce dernier, désignées respectivement tapis de saisie 3a et tapis d'amenage 3b.

Le tapis de saisie 3a et le tapis d'entrée 4a forment ensemble une bouche en " V ", afin de diriger la matière polluante 6 vers la gaine de conduite 5 forcée, qui est formée par la disposition parallèle dans un même plan des tapis de convoyage 3b et intermédiaire 4b.

La distance d séparant les tapis de convoyage 3b et intermédiaire 4b est réglable par l'intermédiaire de vérins hydrauliques ou des ressorts à lames, non représentés, dont la partie fixe de chacun des vérins est solidaire, par exemple, du tapis inférieur 4 et la partie mobile solidaire du tapis supérieur 3.

De même, l'angle α, désigne angle d'ouverture, défini entre les tapis de saisie 3a et d'entrée 4a formant la bouche en " V " est réglable par l'intermédiaire par exemple de vérins non représentés.

Le tapis d'entrée 4a peut avantageusement comporter un volet articulé à son extrémité autour d'un axe transversal destiné à agir comme un volet anti-retour de la matière polluante à récupérer. Ce volet est en outre associé à au moins un flotteur permettant ainsi en fonction des mouvements de l'eau d'ouvrir ou de fermer le volet. L'association du volet avec le flotteur est réalisée par exemple au moyen d'une bielle coudée dont l'angle du coude est compris entre 110 et 160 degrés, de préférence 130 degrés. On comprend qu'avec un tel angle lorsque le flotteur affleure la surface de l'eau le volet anti-retour est complètement ouvert tandis que lorsque ce flotteur est immergé en totalité dans l'eau le volet se trouve dans une position sensiblement verticale évitant à la matière polluante de ressortir du moyen de convoyage.

Comme visible sur la figure 1, le tapis d'amenage 3b a une longueur supérieure à celle du tapis intermédiaire 4b et est pourvu à son extrémité aval d'un moyen de nettoyage 9 dudit tapis 3b.

Ce moyen de nettoyage 9 est constitué de deux rouleaux compresseurs 10 et 11, équipés d'au moins un couteau racleur C disposé sur leurs périphéries, coopérant avec le tapis de convoyage 3b, et destinés à décrocher la matière polluante de ce dernier. La matière polluante 6 ainsi décrochée tombe par gravité, comme illustré sur la figure 1, automatiquement sur le tapis d'évacuation 4c disposé, avantageusement, au droit du moyen de nettoyage 9.

De manière identique, un moyen de nettoyage 9' est agencé à la partie aval du tapis d'évacuation 4c au droit duquel se situe la capacité de stockage 7.

On notera que les rouleaux du moyen de nettoyage 9, 9' peuvent être pourvus de déflecteurs latéraux 12, tel que représentés à la figure 2, parant ainsi aux débordements éventuels de la matière polluante.

La capacité de stockage 7 -ou bac récepteur- est constituée d'un réservoir en matière plastique, de préférence perméable et résistant aux hydrocarbures.

Selon une variante de réalisation représentée aux figures 3 et 4, la capacité de stockage 7 est constituée d'un réservoir 13 type accordéon à capacité de remplissage régulé par des câbles 14a dont l'une des extrémités est solidaire du navire. Ce réservoir peut être laissé sur une zone provisoirement ou chaluté au navire, comme schématisé à la figure 3. Dans ce dernier cas, le réservoir 13 est équipé de bouées 14 et de balises 15 afin de maintenir le réservoir à la surface de l'eau et d'être identifié. De plus, un dispositif anti-retour 16 de la matière est agencé à l'entrée du réservoir. Ce dispositif est constitué d'un volet souple articulé dans la partie inférieure du réservoir comme visible sur la figure 4. Ce réservoir du type dit accordéon peut être fermé une fois rempli et comporter un orifice de vidange.

On notera que de manière avantageuse, le réservoir 13 peut être utilisé seul pour la récupération des matières polluantes.

Selon le type de la matière polluante à récupérer, il est possible de disposer à l'entrée de la bouche formée à l'aval de l'appareil récupérateur, un dispositif de découpe 17 de la matière 6 notamment pour des matières collantes du type hydrocarbure.

Ce dispositif de découpe 17 est composé d'une pluralité de bras trancheurs 18, constitué d'un câble, par exemple en inox, disposés verticalement à l'entrée de la bouche, destiné à couper la matière sans brassage de cette dernière.

Ce dispositif 17 comporte, en outre, un moyen de guidage 19 de la matière polluante 6 vers l'entrée de la bouche qui est constitué d'une vis sans fin motorisée dont la vitesse est adaptée à la matière à récupérer. De manière avantageuse, l'hélice formée par la vis sans fin est discontinue de façon à réduire l'adhérence de la matière sur cette dernière.

Selon une variante de réalisation, le moyen de guidage 19 est constitué d'une vis sans fin sur laquelle sont agencées deux hélices 30 et 31 à angle opposé disposées de manière symétrique par rapport à un axe transversal X de ladite vis, comme visible sur la figure 5, dirigeant ainsi la matière à récupérer vers le centre des tapis roulants supérieur et inférieur 3 et 4.

La vitesse de rotation de chaque tapis est égale et réglable, de manière connue, afin de s'adapter à la matière à récupérer.

Suivant le type de polluant à récupérer, le moyen de guidage peut en outre comporter à l'embouchure de la bouche formée par le tapis supérieur 3 et le tapis inférieur 4 des courroies crantées disposées verticalement et formant la forme générale d'un « V » en vue de dessus de l'appareil, afin d'élargir le champ de travail de l'appareil selon l'invention

Le fonctionnement du dispositif selon la présente invention va maintenant être expliqué en relation avec la figure 1.

On comprend à la lecture de la description ci-dessus, que le navire 2 équipé de l'appareil de récupération 1 selon la présente invention, permet le convoyage ou ramassage des matières flottantes 6 par l'introduction de ces dernières, qui sont dirigées vers les moyens de convoyages 3 et 4, par l'intermédiaire éventuellement du dispositif de découpe 17. La matière est ainsi amenée dans la bouche puis dirigée vers le conduit 5 formé par les tapis roulants supérieur 3 et inférieur 4, dans lequel est emprisonnée la matière. Enfin, les matières 6 acheminées dans la partie aval du conduit 5 sont libérées sur le tapis d'évacuation 4c avant d'être emmagasinées dans la capacité de stockage 7.

Lors de l'utilisation de cet appareil pour la récupération de matière polluante adhérente un dispositif de nettoyage 9, 9' est respectivement disposé à l'extrémité aval de chacun des tapis 3 et 4 décrochant ainsi la matière 6 du moyen de convoyage.

Selon un autre mode de réalisation représenté à la figure 6, l'appareil récupérateur selon l'invention peut être utilisé pour le ramassage des algues.

Afin de simplifier la description les éléments identiques au mode de réalisation décrit ci-dessus comportent les mêmes références numériques. Dans une telle application, le tapis d'entrée 4a est remplacé par une barre de coupe 20, ou une pelle, disposée horizontalement et une roue de profondeur 21 est agencée sur la partie amont du tapis inférieur 4 afin d'éviter de racler le fond de la mer.

La barre de coupe 20, selon une variante, est remplacée par des couteaux disposés sur l'un des tapis du moyen de convoyage.

En outre, l'ensemble formant moyen de convoyage constitué des tapis inférieur 4 et supérieur 3 est articulé autour d'un axe transversal Y permettant ainsi les débattements en fonction du profil du fond de la mer. On notera que dans le premier mode de réalisation, cette articulation autour de l'axe Y est également envisagée afin de suivre efficacement le mouvement de la mer ou plan d'eau.

De manière avantageuse, chacun des tapis inférieur 4 et supérieur 3 est pourvu sur sa face d'aspérités du type pointes métalliques afin de permettre un accrochage efficace des algues. Dans un tel mode de réalisation, le dispositif de nettoyage 9, 9' est remplacé par des rouleaux pourvus chacun sur leur périphérie d'une pluralité de pions destinés à coopérer avec la forme des tapis afin de les nettoyer.

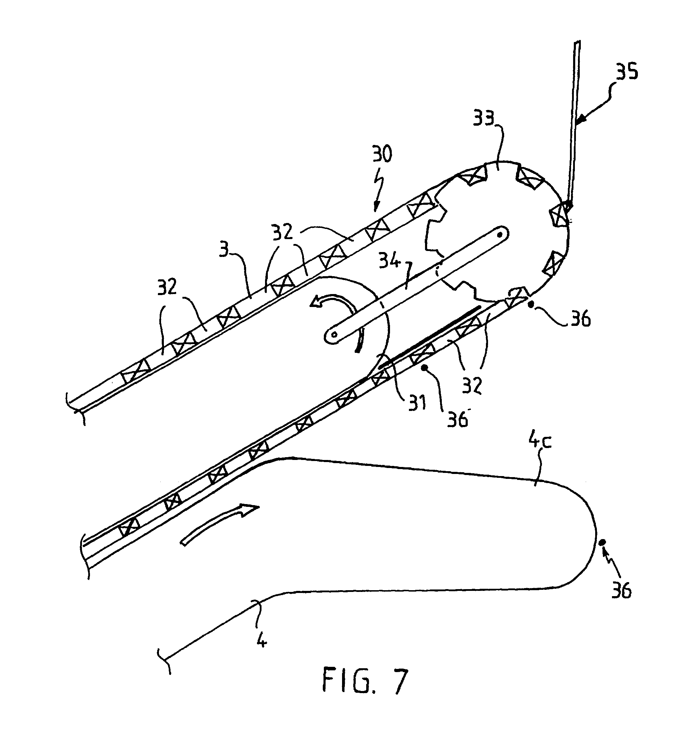

On a représenté à la figure 7, une variante de réalisation du dispositif de nettoyage 9, 9'. Dans cette variante, le tapis de convoyage supérieur 3 est associé à une chaîne 30, de largeur identique au tapis, entraînée en rotation par au moins un rouleau motorisé 31 et un rouleau tendeur. Les espaces 32 entre chaque maillons de la chaîne formant en coopération avec le tapis inférieur 4 des réservoirs d'acheminement de la matière polluante. Afin de nettoyer chaque espace de la chaîne 30, une roue crantée 33 montée libre en rotation est disposée à l'extrémité de celle-ci. Les crans de la roue permettent ainsi de dégager aisément la matière qui y est logée. Cette roue crantée 33 est rendue solidaire de l'axe du rouleau 31 motorisé au moyen par exemple de bras supports 34 comme visible sur la figure 7. Au droit de cette roue 33 peut également être disposé un racloir 35 destiné à coopérer avec les parties pleines de la chaîne. Le tapis inférieur 4c est pourvu uniquement d'un fil d'acier dit « corde à piano » 36 positionnée transversalement à l'extrémité de celui-ci. On notera, en outre que de telles « cordes à piano » 36 peuvent également être positionnées transversalement sur le tapis supérieur 3 afin de dégager un maximum de matière polluante avant la mise en oeuvre de la roue de nettoyage 33.

On comprend à la lecture de la description ci-dessus que l'appareil de la présente invention est relativement simple à réaliser et permet une récupération des matières polluantes sans brassage de ces dernières, et sans briser la continuité du polluant.

Bien que l'invention ait été décrite en liaison avec deux modes de réalisation particuliers elle comprend tous les équivalents techniques des moyens décrits.

En particulier, on comprend bien qu'un tel appareil récupérateur de polluant peut aussi bien être fixé mécaniquement à un engin terrestre ou amphibie, que sur un navire tel que schématisé. Dans le cas d'engin terrestre, la partie amont des tapis est également en contact direct avec le milieu (sable ou eau) dans lequel se trouve la matière polluante afin de saisir au mieux ladite matière. De plus un navire peut être équipé d'un tel appareil dans sa partie avant comme sur ses côtés.

Cet appareil s'adapte très facilement sur la plupart des navires, tel que coquiller, et notamment sur des engins qui n'ont pas été conçus pour réaliser ce travail.

## Revendications

1. Appareil récupérateur de matières polluantes, en particulier des hydrocarbures, susceptible d'être fixé à un engin maritime ou terrestre, constitué d'un moyen de convoyage de la matière polluante (6) jusqu'à l'intérieur d'une capacité de stockage (7), le moyen de convoyage étant constitué de deux tapis roulants, désigné tapis supérieur (3) et tapis inférieur (4), disposés l'un au-dessus de l'autre de manière à former une gaine (5) de conduite forcée pour la matière polluante (6) à récupérer afin de l'acheminer dans la capacité de stockage (7) et en ce que la partie amont des tapis (3, 4) est en contact direct avec le milieu dans lequel se trouve la matière polluante, **caractérisé en ce que** le tapis supérieur (3) est associé à une chaîne (30) de largeur identique au tapis (3), entraînée en rotation par au moins un rouleau motorisé (31) et un rouleau tendeur, cette chaîne (30) comportant des espaces (32) entre chaque maillon qui forment en coopération avec le tapis inférieur (4) des réservoirs d'acheminement de la matière polluante et **en ce qu'**une roue crantée (33) montée libre en rotation est disposée à l'extrémité aval de la chaîne (30) permettant ainsi de dégager la matière polluante qui y est logée assurant ainsi un moyen de nettoyage (9).

2. Appareil selon la revendication 1, **caractérisé en ce que** la partie amont des tapis supérieur (3) et inférieur (4) est agencée de telle manière à former ensemble une bouche en " V " dont l'angle d'ouverture (α) est réglable en fonction de la consistance de la matière polluante à traiter.

3. Appareil selon la revendication 2, **caractérisé en ce qu'**il est disposé à l'entrée de ladite bouche un dispositif de découpe (17) de la matière (6).

4. Appareil selon la revendication 2, **caractérisé en ce qu'**il est disposé à l'entrée de ladite bouche au moins un dispositif de guidage (19) de la matière polluante (6).

5. Appareil selon la revendication 2, **caractérisé en ce que** le dispositif de découpe (17) est composé d'une pluralité de bras trancheurs (18), constitué d'un câble, par exemple en inox, disposés verticalement à l'entrée de la bouche.

6. Appareil selon la revendication 4, **caractérisé en ce que** le moyen de guidage (19) de la matière polluante (6) vers l'entrée de la bouche, est constitué d'une vis sans fin motorisée dont la vitesse est adaptée à la matière à récupérer.

7. Appareil selon la revendication 4 ou 6, **caractérisé en ce que** le moyen de guidage (19) comporte à l'embouchure de la bouche formée par le tapis supérieur (3) et le tapis inférieur (4) des courroies crantées disposées verticalement et formant la forme générale d'un « V » en vue de dessus de l'appareil.

8. Appareil selon l'une quelconque des revendications précédentes, **caractérisé en ce que** la distance (d) séparant les tapis supérieur (4) et inférieur (3) constituant la gaine de conduite forcée est réglable en fonction de la matière (6) par exemple au moyen de vérins hydrauliques.

9. Appareil selon l'une quelconque des revendications précédentes, **caractérisé en ce que** le tapis inférieur (4) est pourvu dans sa partie aval d'un moyen de nettoyage (9').

10. Appareil selon la revendication 9, **caractérisé en ce que** le moyen de nettoyage (9') du tapis inférieur (4c) est constitué d'un fil d'acier (36) positionnée transversalement à l'extrémité de celui-ci (4c).

11. Appareil selon l'une quelconque des revendications précédentes, **caractérisé en ce** la capacité de stockage (7) est constituée d'un réservoir (13) à capacité de remplissage régulé par des câbles (14) solidaires d'un engin maritime.

12. Appareil salon l'une quelconque des revendications précédentes **caractérisé en ce que** la partie amont du tapis inférieur (4) est équipée d'une roue de profondeur (21) et **en ce que** l'ensemble formant moyen de convoyage (3 ; 4) est articulé autour d'un axe transversal sur l'engin auquel il est fixé.

13. Engin terrestre ou maritime, **caractérisé en ce qu'**il comporte au moins un appareil conforme à l'une quelconque des revendications précédentes.

## Patentansprüche

1. Gerät zur Rückgewinnung von Schadstoffen, insbesondere von Kohlenwasserstoffen, das an einer im Meer oder an Land befindlichen Maschine befestigt werden kann, bestehend aus einem Mittel für den Transport des Schadstoffs (6) bis ins Innere eines Lagerbereichs (7), wobei das Transportmittel aus zwei Transportbändern besteht, die als oberes Band (3) und unteres Band (4) bezeichnet werden, übereinander angeordnet sind, um eine Druckleitungshülle (5) für den wiederzugewinnenden Schadstoff (6) zu bilden, um ihn in den Lagerbereich (7) zu transportieren, und dass der stromaufwärts liegende Teil der Bänder (3, 4) in direktem Kontakt mit dem Milieu steht, in dem sich der Schadstoff befindet, **dadurch gekennzeichnet, dass** das obere Band (3) einer Kette (30) mit einer Breite gleich der des Bandes (3) zugeordnet ist, die von mindestens einer motorbetriebenen Rolle (31) und einer Spannrolle in Drehung versetzt wird, wobei diese Kette (30) Freiräume (23) zwischen jedem Glied aufweist, die in Zusammenwirkung mit dem unteren Laufband (4) Transportbehälter für den Schadstoff bilden, und dass ein frei drehbar montiertes Zahnrad (33) am stromabwärts liegenden Ende der Kette (30) angeordnet ist, wodurch es möglich wird, den dort lagernden Schadstoff zu lösen, wodurch eine Reinigungseinrichtung (9) gewährleistet wird.

2. Gerät nach Anspruch 1, **dadurch gekennzeichnet, dass** der stromaufwärts liegende Bereich des oberen (3) und des unteren Bands (4) so ausgebildet ist, dass sie zusammen eine V-förmige Mündung bilden, deren Öffnungswinkel (α) in Abhängigkeit von der Konsistenz des zu behandelnden Schadstoffs einstellbar ist.

3. Gerät nach Anspruch 2, **dadurch gekennzeichnet, dass** am Eingang der Mündung eine Vorrichtung (17) zum Schneiden des Stoffs (6) angeordnet ist.

4. Gerät nach Anspruch 2, **dadurch gekennzeichnet, dass** am Eingang der Mündung mindestens eine Führungsvorrichtung (19) für den Schadstoff (6) angeordnet ist.

5. Gerät nach Anspruch 2, **dadurch gekennzeichnet, dass** die Schneidvorrichtung (17) aus mehreren Schneidarmen (18) zusammengesetzt ist, bestehend aus einem Kabel, zum Beispiel aus Inox, die senkrecht am Eingang der Mündung angeordnet sind.

6. Gerät nach Anspruch 4, **dadurch gekennzeichnet, dass** die Einrichtung (19) zur Führung des Schadstoffs (6) zum Eingang der Mündung aus einer motorbetriebenen Endlosschraube besteht, deren Geschwindigkeit dem wiederzugewinnenden Stoff angepasst ist.

7. Gerät nach Anspruch 4 oder 6, **dadurch gekennzeichnet, dass** die Führungseinrichtung (19) an der Öffnung der vom oberen Band (3) und vom unteren Band (4) gebildeten Mündung Zahnriemen aufweist, die senkrecht angeordnet sind und von oberhalb des Geräts gesehen die allgemeine Form eines V bilden.

8. Gerät nach einem der vorhergehenden Ansprüche, **dadurch gekennzeichnet, dass** der das obere Band (4) und das untere Band (3), die die Druckleitungshülle bilden, trennende Abstand (d) in Abhängigkeit von dem Stoff (6) zum Beispiel mit Hilfe von Hubzylindern einstellbar ist.

9. Gerät nach einem der vorhergehenden Ansprüche, **dadurch gekennzeichnet, dass** das untere Band (4) in seinem stromabwärts liegenden Bereich mit einer Reinigungseinrichtung (9') versehen ist.

10. Gerät nach Anspruch 9, **dadurch gekennzeichnet, dass** die Reinigungseinrichtung (9') des unteren Bands (4c) aus einem Stahldraht (36) besteht, der quer zu dessen Ende (4c) positioniert ist.

11. Gerät nach einem der vorhergehenden Ansprüche, **dadurch gekennzeichnet, dass** der Lagerbereich (7) aus einem Behälter (13) mit einer durch fest mit einer im Meer befindlichen Maschine verbundene Kabel geregelten Füllkapazität besteht.

12. Gerät nach einem der vorhergehenden Ansprüche, **dadurch gekennzeichnet, dass** der stromaufwärts liegende Bereich des unteren Bands (4) mit einem Tiefenrad (21) ausgestattet ist, und dass die das Transportmittel (3; 4) bildende Einheit um eine Achse angelenkt ist, die quer zur Maschine liegt, an der sie befestigt ist.

13. An Land oder im Meer befindliche Maschine, **dadurch gekennzeichnet, dass** sie mindestens ein Gerät gemäß einem der vorhergehenden Ansprüche aufweist.

## Claims

1. Apparatus for recovery of pollutant materials, in particular hydrocarbons, capable of being fixed to a sea or land vehicle, constituted by a means for conveying the pollutant material (6) to inside of a storage facility (7), the means of conveyance being constituted by two conveyor belts, referred to as the upper belt (3) and the lower belt (4), disposed one above the other such as to form a penstock casing (5) for the pollutant material (6) so as to forward it into the storage facility (7) and in that the part upstream of the belts (3, 4) is in direct contact with the environment in which the pollutant material is found, **characterized in that** the upper belt (3) is linked to a chain (30), of identical width to the belt (3), set rotating by at least one motorized roller (31) and a tension roller, this chain (30) comprising spaces (32) between each link which form, in cooperation with the lower belt (4), forwarding reservoirs for the pollutant material and **in that** a cogged wheel (33) mounted in freely rotating arrangement is disposed at the downstream end of the chain (30), thus allowing the pollutant material which is lodged there to be freed, thereby providing a cleaning means (9).

2. Apparatus according to Claim 1, **characterized in that** the upstream part of the upper (3) and lower (4) belts is arranged such as together to form a "V-shaped" mouth, the angle of opening (α) of which is adjustable as a function of the consistency of the pollutant material to be treated.

3. Apparatus according to Claim 2, **characterized in that** at the entrance of the said mouth there is disposed a cutting device (17) for the material (6).

4. Apparatus according to Claim 2, **characterized in that** at the entrance of the said mouth there is disposed at least one guide device (19) for the pollutant material (6).

5. Apparatus according to Claim 2, **characterized in that** the cutting device (17) is composed of a plurality of shearing arms (18), constituted by a cable made, for example, of stainless steel, which are arranged vertically at the entrance of the mouth.

6. Apparatus according to Claim 4, **characterized in that** the guide means (19) for guiding the pollutant material (6) toward the entrance of the mouth is constituted by a motorized worm screw, the speed of which is adjusted to the material to be recovered.

7. Apparatus according to Claim 4 or 6, **characterized in that** the guide means (19) comprises, at the orifice of the mouth formed by the upper belt (3) and the lower belt (4), vertically arranged synchronous belts, forming, in a top view of the apparatus, the general shape of a "V".

8. Apparatus according to any one of the preceding claims, **characterized in that** the distance (d) separating the upper (4) and lower (3) belts constituting the penstock casing is adjustable as a function of the material (6) by means, for example, of hydraulic jacks.

9. Apparatus according to any one of the preceding claims, **characterized in that** the lower belt (4) is provided in its downstream part with a cleaning means (9').

10. Apparatus according to Claim 9, **characterized in that** the cleaning means (9') for the lower belt (4c) is constituted by a steel wire (36) positioned transversely at the end of the said belt (4c).

11. Apparatus according to any one of the preceding claims, **characterized in that** the storage facility (7) is constituted by a reservoir (13) with filling capacity regulated by cables (14) fixedly connected to a sea vehicle.

12. Apparatus according to any one of the preceding claims, **characterized in that** the upstream part of the lower belt (4) is equipped with a depth wheel (21) and **in that** the unit forming the means of conveyance (3; 4) is pivot-mounted about a transverse axis on the vehicle to which it is fixed.

13. Land or sea vehicle, **characterized in that** it comprises at least one apparatus according to any one of the preceding claims.
